# EUROPÄISCHE PATENTSCHRIFT

(11) **EP 3 857 051 B1**
(45) Veröffentlichungstag und Bekanntmachung des Hinweises auf die Patenterteilung: **27.08.2025**
(21) Anmeldenummer: 19779453.0
(22) Anmeldetag: 26.09.2019
(51) Int. Cl.: F03D 1/06, F03D 7/02, F03D 13/30

(54) **VERFAHREN ZUM BETREIBEN EINER WINDENERGIEANLAGE, WINDENERGIEANLAGE UND WINDPARK**
METHOD FOR OPERATING A WIND POWER INSTALLATION, WIND POWER INSTALLATION AND WIND FARM
PROCÉDÉ POUR FAIRE FONCTIONNER UNE ÉOLIENNE, ÉOLIENNE ET PARC ÉOLIEN

(30) Priorität: 28.09.2018 DE 102018124084
(43) Veröffentlichungstag der Anmeldung: 04.08.2021
(60) Teilanmeldung: 22184962.3
(73) Patentinhaber: Wobben Properties GmbH, 26607 Aurich (DE)
(72) Erfinder: MESSING, Ralf, 26605 Aurich (DE); MAASS, Hauke, 8000 Aarhus (DK); RUBNER, Florian, 26607 Aurich (DE); MÖLLER, Christian, 26603 Aurich (DE)
(74) Vertreter: Eisenführ Speiser
(86) Internationale Anmeldenummer: PCT/EP2019/076026
(87) Internationale Veröffentlichungsnummer: WO 2020/064925

(56) Entgegenhaltungen:
- EP-A1- 2 518 308
- CN-U- 207 297 229
- DE-A1- 102016 124 703
- US-A1- 2013 234 437
- US-A1- 2017 328 346

## Beschreibung

Die vorliegende Erfindung betrifft ein Verfahren zum Betreiben einer Windenergieanlage zum Erzeugen elektrischer Leistung aus Wind, wobei die Windenergieanlage einen aerodynamischen Rotor mit in ihrem Blattwinkel verstellbaren Rotorblättern aufweist und der Rotor mit einer einstellbaren Rotornenndrehzahl betrieben wird. Weiterhin betrifft die vorliegende Erfindung ein Rotorblatt eines Rotors einer Windenergieanlage, eine Windenergieanlage sowie einen Windpark.

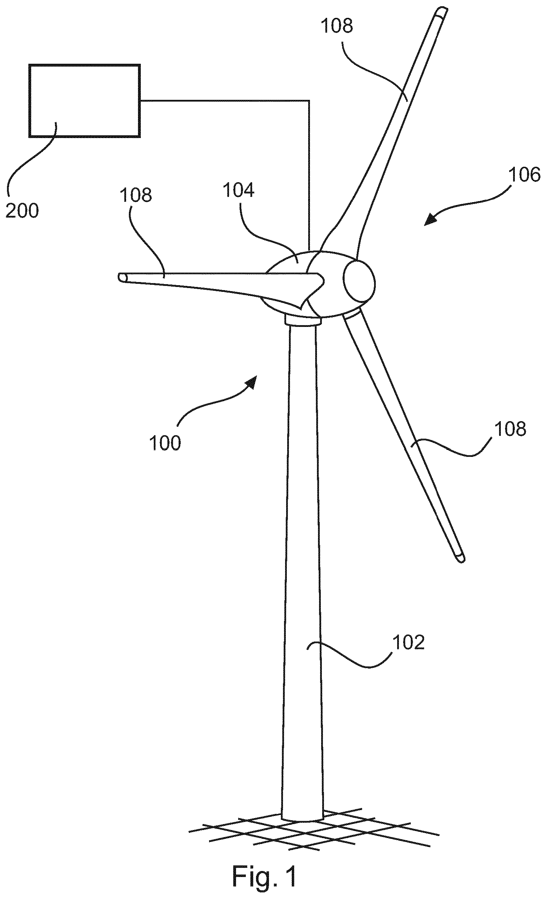

Windenergieanlagen sind allgemein bekannt und beispielsweise wie in Fig. 1 ausgestaltet. Die Auslegung von Windenergieanlagen respektive ihrer Bauteile erfolgt anhand standardisierter Richtlinien (z.B. IEC 61400), welche die wesentlichen Auslegungsanforderungen zur Sicherstellung der technischen Integrität von Windenergieanlagen zum Gegenstand hat. Der Zweck dieser Norm besteht darin, für ein angemessenes Schutzniveau gegen Schäden aus Risiken während der geplanten Lebensdauer der Windenergieanlage zu sorgen. Hierbei fließen Normparameter in die von einer normierten Last abhängige, jedoch nicht standortspezifische, Dimensionierung der Windenergieanlage ein. Bei den Normparametern handelt es sich unter anderem um Scherung, das Auftreten von Turbulenzen, klimatische Bedingungen, Luftdichte, Referenzgeschwindigkeiten für Windklassen und Windzonen.

Windenergieanlagen unterliegen je nach Standort unterschiedlichsten Umweltbedingungen, vor allem können sich die Eigenschaften des Windfeldes, dem die Windenergieanlagen im tages- und jahreszeitlichen Wechsel ausgesetzt sind, stark unterscheiden. Das Windfeld ist durch eine Vielzahl von Parametern charakterisiert. Die wichtigsten Windfeldparameter sind mittlere Windgeschwindigkeit, Turbulenz, vertikale und horizontale Scherung, Windrichtungsänderung über der Höhe, Schräganströmung und Luftdichte.

Die Turbulenz beschreibt kurzzeitige Änderungen der Windgeschwindigkeit um einen Mittelwert in Zeitintervallen kleiner als 10 Minuten. Ursächlich hierfür sind im Wesentlichen mechanisch und thermisch induzierte Turbulenzen. Die vertikale Scherung des Windfeldes mit der Erdoberfläche beschreibt dabei die strömungsmechanisch verursachte Turbulenz. Die thermisch induzierte Turbulenz wird hingegen durch Wärmekonvektion bzw. Dissipation verursacht. Die thermisch induzierte Turbulenz hängt in erster Linie von der thermischen Stabilität der Atmosphäre ab. Zur Beschreibung der Turbulenz wird eine dimensionslose als Turbulenzintensität bezeichnete Größe verwendet. Die Turbulenzintensität ist als das Verhältnis der Standardabweichung der Windgeschwindigkeit zum Mittelwert der Windgeschwindigkeit bezogen auf Zeitintervalle von insbesondere 10 Minuten definiert. Die Turbulenzintensität ist ein Maß für die Variabilität der Windgeschwindigkeit innerhalb dieser Zeiträume.

### Referenzen:

- [1]: J.F.Manwell, J.G.McGowan, A.L.Rogers: "Wind energy explained - theory, design and application", 2nd edition, John Wiley and Sons Ltd., 2009.
- [2]: T.Burton, D.Sharpe, N.Jenkins, E.Bossanyi: "Wind energy handbook", John Wiley and Sons Ltd., 2001.
- [3]: F.Boettcher: "Statistische Analyse der atmosphärischen Turbulenz und allgemeiner stochastischer Prozesse", Dissertation an der Carl von Ossietzky Universität Oldenburg, 2005.
- [4]: R.Gasch, J.Twele: "Windkraftanlagen - Grundlagen, Entwurf, Planung und Betrieb", 4. Auflage, Teubner Verlag, 2005.

Das Deutsche Patent- und Markenamt hat in der Prioritätsanmeldung zu vorliegender Anmeldung folgenden Stand der Technik recherchiert: US 2017 / 0328346 A1, DE 10 2008 009 585 A1, DE 10 2013 100 387 A1, US 2017 / 0218923 A1, US 2010 / 0135789 A1, EP 2518308 A1, WO 2018 / 153518 A1, US 2015 / 0159493 A1.

Das Europäische Patentamt hat zu der vorliegenden Anmeldung folgenden Stand der Technik recherchiert: EP 2 518 308 A1, US 2013/234437 A1, US 2017/328346 A1, CN 207 297 229 U und DE 10 2016 124 703 A1. Das Dokument EP 2 518 308 A1 betrifft ein Verfahren zum Steuern des Betriebs einer Windenergieanlage, das einen Geländeklassenparameter heranzieht. Das Dokument US 2013/234437 A1 beschreibt eine Sturmregelung, also einen Betrieb von Windenergieanlagen über der Nennwindgeschwindigkeit. Das Dokument US 2017/328346 A1 betrifft ein Verfahren zum Bestimmen einer Konfiguration einer Windenergieanlage einer bestimmten Windenergieanlagenart, wobei eine Vielzahl von Kombinationen physischen und regelungstechnischer Parameter der Windenergieanlage tabelliert sind und aus diesen Kombinationen in Abhängigkeit von verschiedenen Parametern eine geeignete Kombination ausgewählt wird. Das Dokument CN 207 297 229 U betrifft die Kombination von Vortex-Generatoren, Spoilern und/oder Gurney-Flaps auf einem Rotorblatt. Das Dokument DE 10 2016 124 703 A1 betrifft eine Luftdichte abhängige Drehzahlkorrektur.

Vor diesem Hintergrund war es eine Aufgabe der vorliegenden Erfindung, ein Verfahren zum Betreiben einer Windenergieanlage weiterzubilden, welches sich durch einen effizienteren Betrieb auszeichnet, aber auch ein Rotorblatt eines Rotors einer Windenergieanlage, eine Windenergieanlage sowie einen Windpark anzugeben, die einen effizienteren Betrieb ermöglichen.

Die der Erfindung zugrundeliegende Aufgabe wird durch ein Verfahren zum Betreiben einer Windenergieanlage mit den Merkmalen gemäß den unabhängigen Ansprüchen gelöst. Gemäß dem Anspruch 1 ist ein Verfahren zum Betreiben einer Windenergieanlage zum Erzeugen elektrischer Leistung aus Wind vorgesehen.

Erfindungsgemäß wird somit vorgeschlagen, auf einen einheitlich parametrisierten Betrieb von Windenergieanlagen zu verzichten, sondern die spezifische, an einem Standort bestimmte Turbulenzklasse für die Festlegung der Rotornenndrehzahl heranzuziehen.

So werden gemäß der Richtlinie IEC 61400 anhand von Turbulenzintensitäten mehrere Turbulenzklassen bestimmt. Grundsätzlich werden gleichartige Windenergieanlagen, beispielsweise eines Windparks, an Standorten mit unterschiedlichen Turbulenzklassen hinsichtlich ihrer Betriebsführung mit identischen Parametern betrieben, was einen entsprechenden Einfluss auf die individuelle Jahresenergieerzeugung (AEP) hat. Erfindungsgemäß bedeutet die Anpassung der Betriebsparameter, insbesondere der Anpassung der Rotornenndrehzahl, daher eine mögliche Verbesserung der AEP.

Die Rotornenndrehzahl beschreibt vorzugsweise die Drehzahl des Rotors, bei der ein Generator der Windenergieanlage die Nennleistung erreicht. Nach Erreichen dieser Leistung ändert sich der Betrieb der Windenergieanlage vorzugsweise in den Drehzahlregelbetrieb, bei der die Windenergieanlage auf die Regeldrehzahl bzw. Rotorsolldrehzahl geregelt wird. Diese liegt aus Gründen von Systemträgheit und Reglergeschwindigkeit vorzugsweise 0.1-0.3 rpm oberhalb der Rotornenndrehzahl. Im Rahmen dieser Offenbarung wird in dem Fall, in dem im Betrieb bei Nennleistung die Regeldrehzahl von der Rotornenndrehzahl abweicht, die Regeldrehzahl synonym mit der Rotornenndrehzahl bezeichnet.

Bevorzugt kann die Turbulenzklasse aufgrund einer an der Windenergieanlage gemessenen Turbulenzintensität bestimmt werden.

Dabei kann die Festlegung der Rotornenndrehzahl in Abhängigkeit von der bestimmten Turbulenzklasse derart erfolgen, dass aufgrund der gemessenen Turbulenzintensität zu erwartende Lasten auf den Rotor kompensiert werden. Eine höhere Turbulenzintensität bewirkt das Ansteigen von auf den Rotor einwirkenden Lasten. Dem kann erfindungsgemäß dadurch begegnet werden, dass die Rotornenndrehzahl abgesenkt wird. In dem Maße, wie es zu einer Absenkung der Rotornenndrehzahl kommt, kann die Erhöhung der Last aufgrund der höheren Turbulenzintensität teil-, voll- oder überkompensiert werden.

Eine niedrigere Turbulenzintensität wiederum bewirkt das Abfallen von auf den Rotor einwirkenden Lasten. In diesem Falle kann dem erfindungsgemäß dadurch begegnet werden, dass die Rotornenndrehzahl angehoben wird. Aufgrund der Verringerung der Lasten bei niedrigeren Turbulenzintensitäten kann die Rotornenndrehzahl in dem Maße angehoben werden, dass das Lastniveau bei höheren Turbulenzintensitäten nicht überschritten wird.

Erfindungsgemäß wird die Turbulenzklasse aus der Gruppe enthaltend "A", "B" und "C" ausgewählt. Die Definition dieser Turbulenzklassen kann beispielsweise anhand der IEC 61400 gewählt werden.

Erfindungsgemäß wird die Rotornenndrehzahl gegenüber der bestimmten Turbulenzklasse derart festgelegt, dass die Rotornenndrehzahl bei Turbulenzklasse "A" kleiner als bei Turbulenzklasse "B" und bei Turbulenzklasse "B" kleiner als bei Turbulenzklasse "C" ist.

Des Weiteren können auf den Rotorblättern zwischen Rotorblattwurzel und Rotorblattspitze mehrere Wirbelgeneratoren angeordnet werden, deren Anzahl und Positionierung, insbesondere deren radiale Ausdehnung ausgehend von der Rotorblattwurzel in Richtung der Rotorblattspitze, in Abhängigkeit von der bestimmten Turbulenzklasse bestimmt wird. Bei den Wirbelgeneratoren kann es sich bevorzugt um bekannte Anordnungen mit im Wesentlichen senkrecht zu einer Rotorblattoberfläche angeordneten Finnen, die beispielsweise paarweise auf Grundplatten angeordnet sind, handeln. Die Wirbelgeneratoren können aber auch beliebige andere passive oder aktive Mittel zur Strömungsbeeinflussung oder beliebige Kombinationen davon sein.

Zudem kann die Anzahl und die Positionierung der Wirbelgeneratoren entlang des Rotorblattes in Abhängigkeit von einer standortspezifischen Luftdichte bestimmt werden. Ein Absinken der Luftdichte kann dazu führen, dass der minimale Blattwinkel ab einer gewissen Leistung angehoben werden muss, um eine Strömungsablösung am Rotorblatt und damit signifikante Ertragsverluste zu vermeiden. Dem kann auch durch die, für die an dem Standort vorliegende Luftdichte, angepasste radiale Ausdehnung der Belegung mit Wirbelgeneratoren ausgehend von der Rotorblattwurzel in Richtung der Rotorblattspitze begegnet werden.

Hierzu kann die radiale Ausdehnung der Wirbelgeneratoren entlang des Rotorblattes in Abhängigkeit der Luftdichte derart bestimmt werden, dass zusätzliche Ertragsverluste durch eine bei niedrigerer Luftdichte notwendige Erhöhung des Blattwinkels zumindest teilweise kompensiert, vorzugsweise kompensiert und besonders bevorzugt überkompensiert, werden. Die Vornahme der Anordnung der Wirbelgeneratoren in Abhängigkeit von der bestimmten Luftdichte kann bewirken, dass eine Anhebung des Blattwinkels aufgrund niedriger Luftdichte geringer ausfällt oder sogar ganz entfallen kann. Hierdurch kann in Summe eine Ertragssteigerung erreicht werden.

In einer Ausführungsform wird die Rotornenndrehzahl zusätzlich in Abhängigkeit von einer standortspezifischen Luftdichte bestimmt.

Bevorzugt kann die Windenergieanlage in Abhängigkeit von der Turbulenzklasse gemäß unterschiedlicher Betriebskennlinien betrieben wird, so dass in Abhängigkeit von der Turbulenzklasse unterschiedliche Leistungskurven garantiert werden. Dieser Effekt kann gerade bei Windenergieanlagen, die an Standorten mit niedrigen mittleren Windgeschwindigkeiten betrieben werden, dazu führen, dass durch die vermehrte Häufigkeit von niedrigen Windgeschwindigkeiten die Windenergieanlage bei erhöhter Turbulenzintensität mehr Ertrag liefert als bei niedrigerer Turbulenzintensität. Insbesondere kann bei niedrigen mittleren Windgeschwindigkeiten bei einem Betrieb der Windenergieanlage in der höheren Turbulenzklasse "A" durch die Anpassung der Betriebsparameter ein höherer Ertrag generiert werden als in der niedrigeren Turbulenzklasse "B". Hierbei ist insbesondere der Teillastbetrieb, also der Bereich mit nahezu konstanter Schnelllaufzahl, relevant. Im Bereich nahe und in Richtung der Nennleistung ist keine konstante Schnelllaufzahl gegeben, vielmehr fällt die Schnelllaufzahl in diesem Bereich ab.

Gemäß einer Weiterbildung kann eine Blattwinkelkennlinie in Abhängigkeit von der bestimmten Turbulenzklasse festgelegt werden. Es ist vorgesehen, dass die Rotornenndrehzahl in Turbulenzklasse "C" größer als in Turbulenzklasse "B" und in Turbulenzklasse "B" größer als in Turbulenzklasse "A" ist. Da bei niedriger Rotornenndrehzahl eine niedrigere Schnelllaufzahl vorliegt, wird daher zur Vermeidung eines Strömungsabrisses der Blattwinkel gemäß der Blattwinkelkennlinie der jeweiligen Turbulenzklasse erhöht.

Erfindungsgemäß wird bei einem Übergang von einer niedrigeren Turbulenzklasse zu einer höheren Turbulenzklasse die Rotornenndrehzahl abgesenkt.

Dabei kann ein Absenken der Rotornenndrehzahl mit einer Erhöhung des Blattwinkels in wenigstens einem Betriebspunkt verbunden sein.

Bevorzugt kann statt der Erhöhung des Blattwinkels in wenigstens einem Betriebspunkt durch die Auslegung und Positionierung von Wirbelgeneratoren entgegengewirkt werden, derart, dass die Absenkung der Rotornenndrehzahl im Wesentlichen ertragsneutral bleibt. Es ergibt sich zwar eine Zunahme des Widerstands, der durch die in Längsrichtung des Rotorblattes ausgedehnte Anordnung der Wirbelgeneratoren hervorgerufen wird. Diese Zunahme des Widerstands wird jedoch durch die Vorteile der Auftriebserzeugung aufgewogen.

So kann die Belegung der Rotorblätter mit Wirbelgeneratoren bei einer turbulenzklassenabhängigen Auslegung der Windenergieanlage in radialer Richtung nach außen erhöht werden, um bei einer durch die Absenkung der Rotornenndrehzahl bei höherer Turbulenzklasse bedingten Absenkung der Schnelllaufzahl im Betrieb den Blattwinkel einer niedrigeren Turbulenzklasse im Wesentlichen beizubehalten.

Bei einem Übergang von einer höheren Turbulenzklasse zu einer niedrigeren Turbulenzklasse wird die Rotornenndrehzahl angehoben.

Dabei kann ein Anheben der Rotornenndrehzahl mit einer Verringerung des Blattwinkels in wenigstens einem Betriebspunkt verbunden sein.

Bevorzugt kann auch statt der Verringerung des Blattwinkels in wenigstens einem Betriebspunkt die Auslegung und Positionierung von Wirbelgeneratoren nach außen verringert werden. Alle Maßnahmen werden für sich oder in Kombination den Ertrag der Anlage erhöhen können.

Gemäß einem weiteren Aspekt wird ein Verfahren zum Betreiben einer Windenergieanlage zum Erzeugen elektrischer Leistung aus Wind beschrieben, wobei die Windenergieanlage einen aerodynamischen Rotor mit in ihrem Blattwinkel verstellbaren Rotorblättern aufweist und der Rotor mit einer insbesondere einstellbaren Rotornenndrehzahl betrieben wird, wobei auf den Rotorblättern zwischen Rotorblattwurzel und Rotorblattspitze mehrere Wirbelgeneratoren angeordnet werden. Eine Anzahl und Positionierung der Wirbelgeneratoren, insbesondere deren radiale Ausdehnung ausgehend von der Rotorblattwurzel in Richtung der Rotorblattspitze, erfolgt in Abhängigkeit von einer standortspezifischen Luftdichte.

Gemäß einem weiteren Aspekt wird ein Verfahren zum Betreiben einer Windenergieanlage zum Erzeugen elektrischer Leistung aus Wind beschrieben, wobei die Windenergieanlage einen aerodynamischen Rotor mit in ihrem Blattwinkel verstellbaren Rotorblättern aufweist und der Rotor mit einer insbesondere einstellbaren Rotornenndrehzahl betrieben wird, dadurch gekennzeichnet, dass eine Regelung der Drehzahl der Windenergieanlage in Abhängigkeit von einer standortspezifischen Luftdichte erfolgt.

Des Weiteren wird ein Rotorblatt mit einer Saugseite und einer Druckseite beschrieben, wobei zwischen Rotorblattwurzel und Rotorblattspitze mehrere Wirbelgeneratoren angeordnet sind, wobei die Bestimmung der Anzahl und die Erstreckung der Anordnung der Wirbelgeneratoren ausgehend von der Rotorblattwurzel in Richtung der Rotorblattspitze in Abhängigkeit von einer bestimmten Turbulenzklasse erfolgt. Die Wirbelgeneratoren sind vorzugsweise auf der Saugseite und/oder der Druckseite angeordnet.

Bevorzugt kann die Erstreckung der Anordnung der Wirbelgeneratoren ausgehend von der Rotorblattwurzel in Richtung der Rotorblattspitze, das heißt in Längsrichtung des Rotorblattes, durch die höchste Turbulenzklasse beschränkt sein, insbesondere von höchster Turbulenzklasse zu niedrigster Turbulenzklasse abnehmen.

Weiterhin betrifft die Erfindung eine Windenergieanlage, umfassend einen aerodynamischen Rotor mit in ihrem Blattwinkel verstellbaren Rotorblättern, wobei der Rotor mit einer einstellbaren Rotornenndrehzahl betreibbar ist, sowie eine Regelung, dadurch gekennzeichnet, dass die Regelung dazu eingerichtet ist, die Windenergieanlage nach einem Verfahren gemäß wenigstens einem der Ansprüche 1 bis 9 zu betreiben.

Dazu kann der Rotor wenigstens ein Rotorblatt aufweisen.

Des Weiteren betrifft die Erfindung auch einen Windpark mit mehreren Windenergieanlagen nach Anspruch 10.

Die Erfindung wird im Folgenden anhand eines möglichen Ausführungsbeispiels unter Bezugnahme auf die beigefügten Figuren näher beschreiben. Hierbei zeigen:
- Fig. 1: eine Windenergieanlage gemäß der vorliegenden Erfindung;
- Fig.2: eine schematische Darstellung eines Rotorblattes;
- Fig. 3: schematisch und exemplarisch Betriebskennlinien für unterschiedliche Turbulenzklassen;
- Fig. 4: schematisch und exemplarisch Verläufe von Schnelllaufzahlen für unterschiedliche Turbulenzklassen;
- Fig. 5: schematisch und exemplarisch Verläufe von Anstellwinkeln für unterschiedliche Turbulenzklassen;
- Fig. 6: schematisch und exemplarisch Verläufe von Auftriebsbeiwerten für unterschiedliche Turbulenzklassen;
- Fig. 7: schematisch und exemplarisch Verläufe von Gleitzahlen für unterschiedliche Turbulenzklassen;
- Fig. 8: schematisch und exemplarisch Verläufe von Leistungskurven bei einem Betrieb der Windenergieanlage in unterschiedlichen Turbulenzklassen;
- Fig. 9: schematisch und exemplarisch Verläufe von Leistungskurven bei unterschiedlichen Turbulenzintensitäten.

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Fig. 1 eine Windenergieanlage als solche schematisch, so dass eine vorgesehene Anordnung von Wirbelgeneratoren nicht eindeutig erkennbar ist.

Fig. 1 zeigt eine Windenergieanlage 100 mit einem Turm 102 und einer Gondel 104. An der Gondel 104 ist ein Rotor 106 mit drei Rotorblättern 108 und einem Spinner angeordnet. Der Rotor 106 wird im Betrieb durch den Wind in eine Drehbewegung versetzt und treibt dadurch einen Generator in der Gondel 104 an. Die Rotorblätter 108 sind in ihrem Blattwinkel einstellbar. Die Blattwinkel bzw. Pitchwinkel der Rotorblätter 108 können durch an den Rotorblattwurzeln der jeweiligen Rotorblätter 108 angeordnete Pitchmotoren verändert werden. Der Rotor 106 wird mit einer einstellbaren Rotornenndrehzahl betrieben.

Mehrere dieser Windenergieanlagen 100 können Teil eines Windparks sein. Dabei unterliegen die Windenergieanlagen 100 je nach Standort unterschiedlichsten Umweltbedingungen. Vor allem können sich die Eigenschaften des Windfeldes, dem die Windenergieanlagen im tages- und jahreszeitlichen Wechsel ausgesetzt sind, stark unterscheiden. Das Windfeld ist durch eine Vielzahl von Parametern charakterisiert. Die wichtigsten Windfeldparameter sind mittlere Windgeschwindigkeit, Turbulenz, vertikale und horizontale Scherung, Windrichtungsänderung über der Höhe, Schräganströmung und Luftdichte.

Die Turbulenz, eine wesentliche die Last an den Rotorblättern 108 beeinflussende Größe, beschreibt kurzzeitige Änderungen der Windgeschwindigkeit um einen Mittelwert in Zeitintervallen kleiner als 10 Minuten. Ursächlich hierfür sind im Wesentlichen mechanisch und thermisch induzierte Turbulenzen. Die vertikale Scherung des Windfeldes mit der Erdoberfläche beschreibt dabei die strömungsmechanisch verursachte Turbulenz. Die thermisch induzierte Turbulenz wird hingegen durch Wärmekonvektion bzw. Dissipation verursacht. Die thermisch induzierte Turbulenz hängt in erster Linie von der thermischen Stabilität der Atmosphäre ab. Zur Beschreibung der Turbulenz wird eine dimensionslose als Turbulenzintensität bezeichnete Größe verwendet. Die Turbulenzintensität ist als das Verhältnis der Standardabweichung der Windgeschwindigkeit zum Mittelwert der Windgeschwindigkeit bezogen auf Zeitintervalle von 10 Minuten definiert. Die Turbulenzintensität ist ein Maß für die Variabilität der Windgeschwindigkeit innerhalb dieser Zeiträume.

So werden gemäß der Richtlinie IEC 61400 Standorte anhand von Turbulenzintensitäten in mehrere Turbulenzklassen "A", "B", "C" unterteilt, wie in der nachstehenden Tabelle aufgeführt.

**Tabelle WEA-Klassen:**

| Windklasse | I | II | III | S |
|---|---|---|---|---|
| Vₐᵥₑ [m/s] | 10 | 8,5 | 7,5 | Standortspezifisch |
| I₁₅ (A) | 18 % | | | |
| I₁₅ (B) | 16 % | | | |
| I₁₅ (C) | 12 % | | | |

In der Tabelle sind Windklassen I, II, III und S für verschiedene Windgeschwindigkeiten definiert. Vₐᵥₑ steht für die mittlere Windgeschwindigkeit auf Nabenhöhe der Windenergieanlage 100. Mit I₁₅ ist die prozentuale Turbulenzintensität auf Nabenhöhe bei einer Windgeschwindigkeit von 15 m/s bezeichnet. Mit "A", "B" und "C" sind verschiedene Turbulenzklassen bezeichnet.

Anhand der Turbulenzintensität I₁₅ werden Standorte in die Turbulenzklassen "A", "B" und "C" eingeteilt. Dabei weist die Turbulenzklasse "A" eine höhere Turbulenzintensität I₁₅ auf als die Turbulenzklasse "B" und Turbulenzklasse "B" weist eine höhere Turbulenzintensität I₁₅ auf als die Turbulenzklasse "C". Höhere Turbulenzen haben höhere Lasten an dem Rotor 106 und dem Rest der Windenergieanlage 100 zur Folge.

Die Windenergieanlage 100 wird in diesem Ausführungsbeispiel von einer Regelung 200, die Teil einer umfassenden Regelung der Windenergieanlage 100 ist, geregelt. Die Regelung 200 wird im Allgemeinen als ein Teil der Regelung der Windenergieanlage 100 implementiert sein.

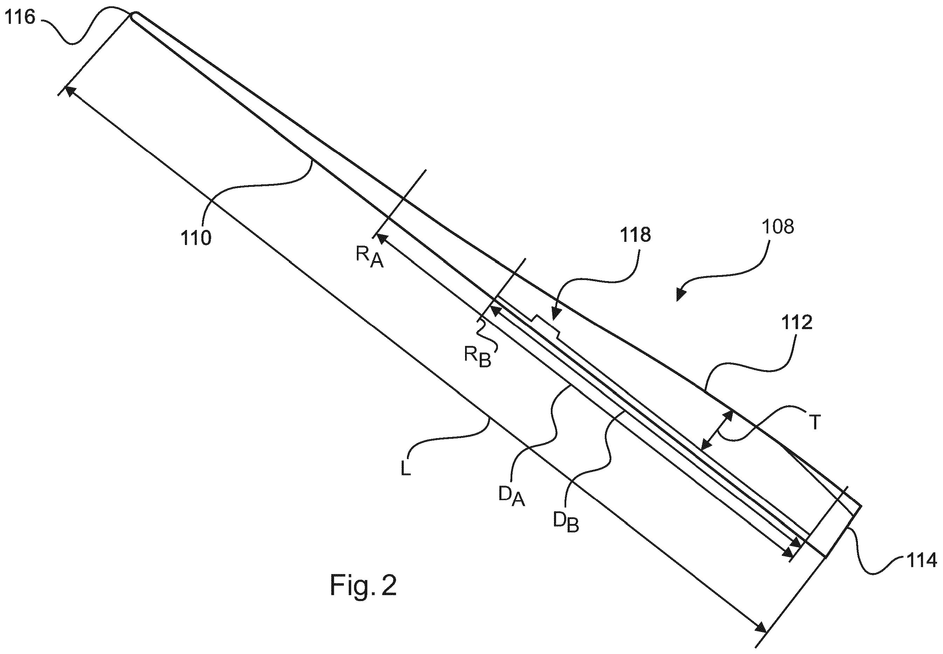

Fig. 2 zeigt eine schematische Ansicht eines einzelnen Rotorblattes 108 mit einer Rotorblattvorderkante 110 sowie einer Rotorblatthinterkante 112. Das Rotorblatt 108 weist eine Rotorblattwurzel 114 und eine Rotorblattspitze 116 auf. Die Länge zwischen der Rotorblattwurzel 114 und der Rotorblattspitze 116 wird als Rotorblattlänge L bezeichnet. Der Abstand zwischen Rotorblattvorderkante 110 und Rotorblatthinterkante 112 wird als Profiltiefe T bezeichnet. An der Rotorblattwurzel 114 oder im Allgemeinen in dem Bereich nahe der Rotorblattwurzel 114 weist das Rotorblatt 108 eine große Profiltiefe T auf. An der Rotorblattspitze 116 ist die Profiltiefe T dagegen sehr viel kleiner. Die Profiltiefe T nimmt, ausgehend von der Rotorblattwurzel 114, in diesem Beispiel nach einem Anstieg im Blattinnenbereich, bis zu einem mittleren Bereich deutlich ab. An dem Rotorblatt, vorzugsweise in dem mittleren Bereich, kann eine Trennstelle vorgesehen sein (hier nicht dargestellt). Vom mittleren Bereich bis zur Rotorblattspitze 116 nimmt die Profiltiefe T üblicherweise stetig ab. nahezu konstant, bzw. die Abnahme der Profiltiefe T ist deutlich verringert.

Die Darstellung in Fig. 2 zeigt die Saugseite des Rotorblattes 108. Auf der Saugseite sind Wirbelgeneratoren 118, die beispielsweise als Grundplatten mit zwei sich davon erstreckenden Finnen ausgeführt sein können, angeordnet. Alternative Ausgestaltungen der Wirbelgeneratoren 118 als aktive oder passive Elemente zur Strömungsbeeinflussung sind denkbar. Während die Wirbelgeneratoren 118 in dem Beispiel auf der Saugseite des Rotorblattes 108 angeordnet gezeigt sind, sind alternativ oder zusätzlich auch Wirbelgeneratoren 118 auf der Druckseite möglich. Die Anordnung der Wirbelgeneratoren 118 erfolgt im Bereich der Rotorblattvorderkante 110. Die Erstreckung der Anordnung der Wirbelgeneratoren 118 beginnt im Bereich der Rotorblattwurzel 114 und verläuft in Richtung der Rotorblattspitze 116. Bezogen auf den Rotor 106 erstrecken sich die Wirbelgeneratoren 118 in radialer Richtung über eine Distanz Dₐ bzw. D_{B} bis zu einer Position Rₐ bzw. R_{B} auf dem Rotorblatt 108. So kann die Distanz D_{B} bis etwa 40 % der Rotorblattlänge L betragen, während die Distanz D_{A} bis etwa 60 % der Rotorblattlänge L betragen kann. Die Distanz D_{A} bzw. D_{B} ist dabei von der Turbulenzklasse "A", "B", "C" abhängig, in welcher die Windenergieanlage 100 betrieben werden soll. Auf die diesbezüglichen Zusammenhänge wird in der Beschreibung weiter unten näher eingegangen. Die Werte von Dₐ bzw. D_{B} sind als beispielhaft zu verstehen, wobei auch deutlich näher an der Rotorblattspitze 116 liegende Werte, insbesondere bis einschließlich der Rotorblattspitze 116, möglich sind.

Die Wirbelgeneratoren 118 sorgen im Nabenbereich des Rotors 106 dafür, dass bei den dort vorgesehenen Profilen der Rotorblätter 108 mit hoher relativer Profildicke, die Profile vor allem bei verschmutzter Oberfläche mit vergleichsweise hohen effektiven Anstellwinkeln α_{eff} angeströmt werden können, ohne dass es bei der Umströmung des Profils zu Ablösungserscheinungen der Strömung kommt. Das mit den Wirbelgeneratoren 118 versehene Profil des Rotorblattes 108 verschiebt die Strömungsablösung zu höheren Anstellwinkeln. Daraus resultieren vergleichsweise hohe Auftriebswerte gegenüber einem Profil, welches nicht mit Wirbelgeneratoren ausgestattet ist. Wirbelgeneratoren 118 sorgen letztendlich dafür, dass die Windenergieanlage 100 sich robust hinsichtlich Witterungs- und Umwelteinflüssen wie Regen oder erhöhte Verschmutzung der Rotorblätter durch Schmutz oder Insekten verhält.

Für einen effizienten Betrieb der Windenergieanlage 100 ist vorgesehen, dass die Turbulenzklasse an einem Standort der Windenergieanlage 100 bestimmt und die Rotornenndrehzahl in Abhängigkeit von der bestimmten Turbulenzklasse "A", "B" oder "C" festgelegt wird. Es wird dabei auf einen einheitlich parametrisierten Betrieb von Windenergieanlagen 100 eines Windparks verzichtet. Stattdessen wird die spezifische, an einem Standort bestimmte Turbulenzklasse "A", "B" oder "C" für die Festlegung der Rotornenndrehzahl herangezogen. Das Betreiben der Windenergieanlage in einer höheren Turbulenzklasse "A", "B", "C" ist u.U. effizienter, da die erzeugbare elektrische Leistung P im Teillastbereich bei höheren Turbulenzintensität I₁₅ größer ist als bei niedrigeren Turbulenzintensität I₁₅. Besonders ausgeprägt ist die vorteilhafte Wirkung der erfindungsgemäßen Lösung bei Schwachwindanlagen, die bereits bei relativ niedrigen Windgeschwindigkeiten Nennleistung erreichen.

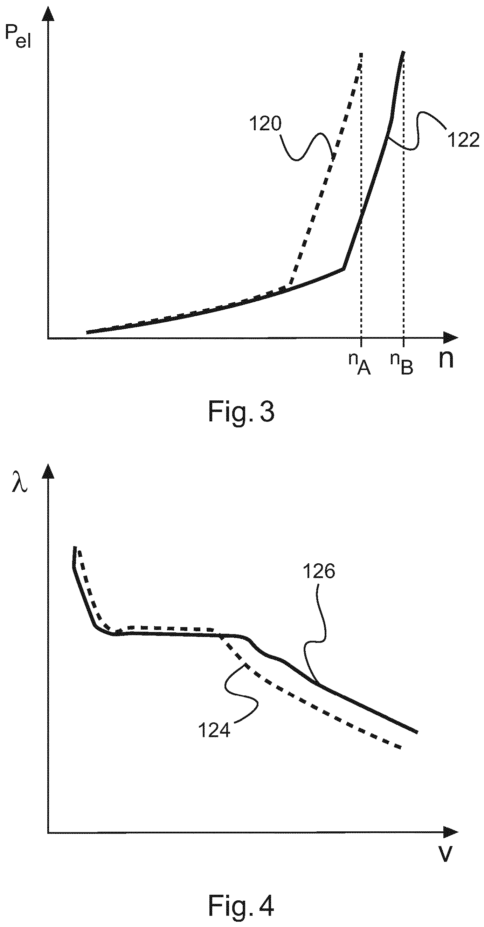

Fig. 3 zeigt schematisch und exemplarisch Betriebskennlinien 120, 122 nur für zwei unterschiedliche Turbulenzklassen "A" und "B". Auf der horizontalen Achse ist die Rotordrehzahl n aufgetragen, auf der vertikalen Achse die elektrische Leistung P. Die Betriebskennlinie 120 gibt den Betrieb der Windenergieanlage 100 in Turbulenzklasse "A" wieder. Die Betriebskennlinie 122 gibt den Betrieb der Windenergieanlage 100 in Turbulenzklasse "B" wieder. In der Turbulenzklasse B wird die Windenergieanlage 100 bei einer Rotornenndrehzahl n_{B}, in der Turbulenzklasse A mit einer Rotornenndrehzahl n_{A} betrieben, wobei die Rotornenndrehzahl n_{B} größer als die Rotornenndrehzahl n_{A} ist. Durch das Absenken der Rotornenndrehzahl n_{B} auf die Rotornenndrehzahl n_{A} wird eine Lastreduzierung bewirkt. Die mit dem Übergang in einen Betrieb der höheren Turbulenzklasse einhergehende Erhöhung der Last aufgrund der höheren Turbulenzintensität I₁₅ kann somit teil-, voll- oder überkompensiert werden. Die Größenordnung der Kompensation ist dabei von der Absenkung der Rotornenndrehzahl abhängig. Alternativ wird durch die Erhöhung der Rotornenndrehzahl n_{A} auf die Rotornenndrehzahl n_{B} eine Lasterhöhung bewirkt. Die Erhöhung der Rotornenndrehzahl kann demzufolge in dem Maße stattfinden wie sich die Lasten beim Übergang von der höheren Turbulenzintensität I₁₅ auf die niedrigere Turbulenzintensität verringern und insgesamt das Lastniveau bei höherer Turbulenzintensität und verringerter Rotornenndrehzahl nicht überschritten wird.

Fig. 4 zeigt schematisch und exemplarisch Verläufe von Schnelllaufzahlen λ für die unterschiedlichen Turbulenzklassen "A", "B". Die Schnelllaufzahl λ beschreibt das Verhältnis von Umfangsgeschwindigkeit zu ungestörter Anströmgeschwindigkeit v des Windes. Der beispielhafte Verlauf 124 stellt sich bei einem Betrieb in der Turbulenzklasse "A" und der Verlauf 126 stellt sich bei einem Betrieb in der Turbulenzklasse "B" ein. Das Absenken der Rotornenndrehzahl von der Rotornenndrehzahl n_{B} auf die Rotornenndrehzahl n_{A} führt ab einer gewissen Windgeschwindigkeit zu kleineren Schnellaufzahlen λ, mit denen die Windenergieanlage 100 betrieben wird, was Einfluss auf die erzeugte Leistung hat.

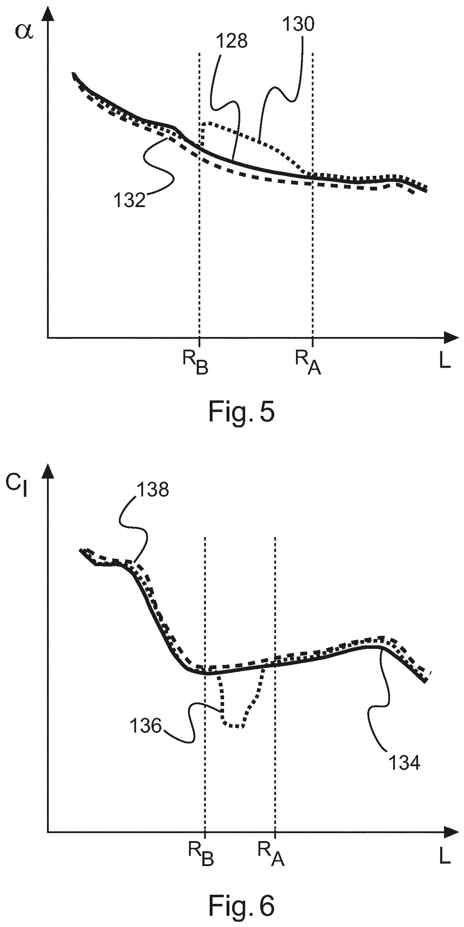

Fig. 5 zeigt schematisch und exemplarisch Verläufe 128, 130, 132 von effektiven Anstellwinkeln α_{eff} für unterschiedliche Turbulenzklassen "A", "B". Auf der vertikalen Achse ist der effektive Anstellwinkel α_{eff} aufgetragen. Auf der horizontalen Achse ist die Länge L des Rotorblattes 108 aufgetragen. Der gezeigte Verlauf 128 stellt sich bei einem Betrieb der Windenergieanlage 100 in Turbulenzklasse "B" ein. Mehrere der Wirbelgeneratoren 118 sind ausgehend von der Rotorblattwurzel 114 in Richtung der Rotorblattspitze 116 angeordnet. Die Anzahl und Positionierung der Wirbelgeneratoren 118, insbesondere deren radiale Ausdehnung über die Distanz D_{B} bis zu der Position R_{B}, wird in Abhängigkeit von der am Standort der Windenergieanlage 100 bestimmten Turbulenzklasse "B" bestimmt.

Der Verlauf 130 für den effektiven Anstellwinkel α_{eff} stellt sich bei einem Wechsel im Betrieb der Windenergieanlage 100 von der Turbulenzklasse "B" in Turbulenzklasse "A" ein, wobei die radiale Ausdehnung der Anordnung von Wirbelgeneratoren 118 unverändert bis maximal zu der Position R_{B} reicht, die durch die Turbulenzklasse "B" bestimmt wird.

Der Verlauf 132 stellt sich schließlich bei einem Wechsel im Betrieb der Windenergieanlage 100 von der Turbulenzklasse "B" in Turbulenzklasse "A" ein, wobei die radiale Ausdehnung der Anordnung der Wirbelgeneratoren 118 an die Turbulenzklasse "A" angepasst wurde und nun maximal bis zu der Position R_{A} reicht.

Fig. 6 zeigt schematisch und exemplarisch Verläufe 134, 136, 138 von Auftriebsbeiwerten cₗ für die beiden unterschiedlichen Turbulenzklassen "A" und "B". Auf der vertikalen Achse ist der Auftriebsbeiwert cₗ aufgetragen. Auf der horizontalen Achse ist die Länge L des Rotorblattes 108 aufgetragen. Der Verlauf 134 stellt sich bei einem Betrieb der Windenergieanlage 100 in Turbulenzklasse "B" bei einer radialen Ausdehnung der Wirbelgeneratoren 118 bis zur Position R_{B} auf dem Rotorblatt 108 ein. Der Verlauf 136 stellt sich bei einem Wechsel im Betrieb der Windenergieanlage 100 von der Turbulenzklasse "B" in Turbulenzklasse "A" ein, wobei die radiale Ausdehnung der Wirbelgeneratoren 118 unverändert bis maximal zu der Position R_{B} reicht. Der Verlauf 138 stellt sich bei einem Wechsel im Betrieb der Windenergieanlage 100 von der Turbulenzklasse "B" in Turbulenzklasse "A" ein, wobei die radiale Ausdehnung der Wirbelgeneratoren 118 an die Turbulenzklasse "A" angepasst wurde und nun maximal bis zu der Position R_{A} reicht.

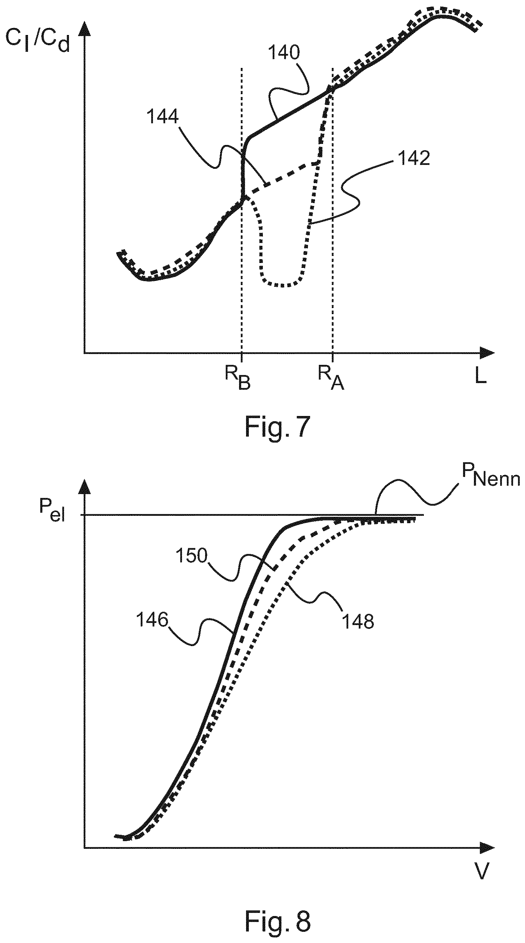

Fig. 7 zeigt schematisch und exemplarisch Verläufe 140, 142, 144 von Gleitzahlen cᵢ/c_{d}, also einem Quotienten aus einem Auftriebskoeffizienten cₗ zu einem Widerstandskoeffizienten c_{d} für unterschiedliche Turbulenzklassen "A" und "B". Auf der vertikalen Achse ist die Gleitzahl cₗ/c_{d} aufgetragen. Auf der horizontalen Achse ist die Länge L des Rotorblattes 108 aufgetragen. Die Verläufe 140,142, 144 korrespondieren mit den zu Figur 5 und 6 bereits geschilderten Betriebsbedingungen.

Demnach hat eine Verringerung der Schnelllaufzahl λ, die aus der Absenkung der Rotornenndrehzahl resultiert, einen Anstieg der Anstellwinkel α_{eff} zur Folge, was durch den Verlauf 130 in Fig. 5 verdeutlicht wird. Der Anstieg der Anstellwinkel α_{eff} ist dabei umso größer, je näher sich ein Profilschnitt des Rotorblattes 108 von der Blattspitze 116 in Richtung der Blattwurzel 114 verlagert. Bei einer allgemein üblichen Auslegung eines Rotorblattes führt somit die Absenkung der Schnelllaufzahl zu einer damit verbundenen Erhöhung des Anstellwinkels α_{eff}, wie der Verlauf 130 in Fig. 5 zeigt, so dass maximal zulässige Anstellwinkel überschritten würden. Mit einer Strömungsablösung einhergehend kommt es zu einem Einbruch des Auftriebsbeiwertes cᵢ, wie der Verlauf 136 gemäß der Fig. 6 zeigt, sowie durch den Anstieg des Strömungswiderstandsbeiwetes c_{d} zu einem Einbruch der Gleitzahl cₗ/c_{d}, was der Verlauf 142 gemäß der Fig. 7 veranschaulicht. Beide Umstände haben signifikante Leistungsverluste zur Folge, was erfindungsgemäß vermieden werden soll. Dahingegen führt eine Anhebung der Schnelllaufzahl zu einer Verringerung der Anstellwinkel α_{eff}, sodass die Gefahr der Strömungsablösung von der Rotorblattwurzel 114 her abnimmt. Die radiale Ausdehnung von Wirbelgeneratoren kann reduziert werden, was zu einer Leistungserhöhung führen kann.

Auf das Absenken der Rotornenndrehzahl und die damit verbundenen Anstiege der Anstellwinkel α_{eff} kann durch das gleichzeitige Anheben der Blattwinkel bzw. Pitchwinkel reagiert werden. Das Anheben des Pitchwinkels führt dazu, dass die Strömungsablösung und der damit verbundene Leistungsverlust verhindert werden. Jedoch führt das Anheben des Pitchwinkels auch zu einem unerwünschten, wenn auch geringeren, Leistungsverlust. Alternativ kann auf das Anheben der Rotornenndrehzahl und die damit verbundene Verringerung der Anstellwinkel α_{eff} mit einem gleichzeitigen Absenken der Blattwinkel bzw. Pitchwinkel reagiert werden. Das Absenken des Pitchwinkels kann dazu führen, dass der Anlagenertrag steigt.

Eine weitere Zielstellung der Erfindung besteht darin, die Absenkung der Rotornenndrehzahl zur Lastreduzierung bei einem Übergang des Betriebs von der niedrigeren Turbulenzklasse in die höhere Turbulenzklasse möglichst ertragsneutral zu erreichen. Hierzu ist vorgesehen, die Rotorblätter 108 in Abhängigkeit von der bestimmten Turbulenzklasse "A", "B" oder "C" die Anzahl und Positionierung der Wirbelgeneratoren 118, insbesondere deren radiale Ausdehnung ausgehend von der Rotorblattwurzel 114 in Richtung der Rotorblattspitze 116, zu bestimmen.

Die radiale Ausdehnung der Anordnung der Wirbelgeneratoren 118 über die Position R_{B} hinaus bis zur Position R_{A} bewirkt, dass die Profilschnitte mit Wirbelgeneratoren 118 durch einen Anstieg des Widerstands in dem Bereich zwischen der Position R_{B} und R_{A} eine schlechtere Gleitzahl cₗ/c_{d} aufweisen, wie der Vergleich des Verlaufs 140 bei Betrieb in der Turbulenzklasse "B" mit dem Verlauf 144 des Betriebs in Turbulenzklasse "A" in Fig. 7 zeigt. Der Verlauf 144 liegt jedoch in dem Bereich zwischen der Position R_{B} und R_{A} deutlich oberhalb des Verlaufs 142 für den Betrieb in Turbulenzklasse "A" ohne eine Anpassung der radialen Ausdehnung der Wirbelgeneratoren 118. Somit ist in einer beispielhaften Windenergieanlage 100 die Maßnahme der an die Turbulenzklasse "A" angepassten radialen Ausdehnung der Anordnung der Wirbelgeneratoren 118 der Maßnahme der unveränderten Belegung des Rotorblattes 108 mit Wirbelgeneratoren 118 und der Anhebung des Pitchwinkels aus Ertragssicht vorzuziehen.

Fig. 8 zeigt schematisch und exemplarisch Verläufe von Leistungskurven 146, 148, 150 bei einem Betrieb der Windenergieanlage 100 in unterschiedlichen Turbulenzklassen "A" und "B" über die Windgeschwindigkeit v aufgetragen. Der Verlauf 146 zeigt die Leistungskurve, die sich bei einem Betrieb der Windenergieanlage 100 in Turbulenzklasse "B" einstellt. Die Wirbelgeneratoren 118 erstrecken sich in radialer Richtung maximal bis zu der Position R_{B}. Der Verlauf 148 zeigt die Leistungskurve, die sich bei einem Betrieb der Windenergieanlage 100 in Turbulenzklasse "A" einstellt. Die Wirbelgeneratoren 118 erstrecken sich dabei in radialer Richtung unverändert bis maximal zu der Position R_{B}. Der Verlauf 150 zeigt die Leistungskurve, die sich bei einem Betrieb der Windenergieanlage 100 in Turbulenzklasse "A" einstellt, wobei in Abhängigkeit von der bestimmten Turbulenzklasse "A" die radiale Ausdehnung der Wirbelgeneratoren 118 bis zu der Position R_{A} ausgedehnt wurde. Letzterem Verlauf der Leistungskurve 150 liegt ein Betrieb zugrunde, welcher sich durch einen reduzierten Pitchwinkel von einem Betrieb in Turbulenzklasse "B" unterscheidet.

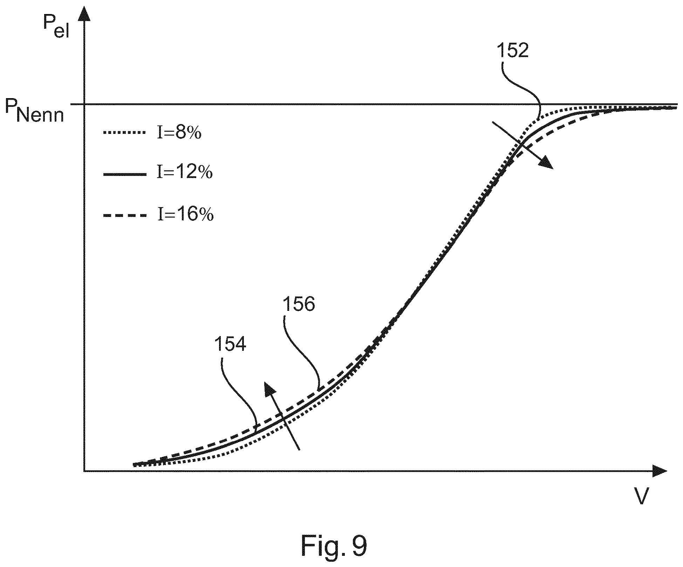

Fig. 9 zeigt schematisch und exemplarisch Verläufe 152, 154, 155 von bestimmten Leistungskurven bei unterschiedlichen Turbulenzintensitäten I₁₅. Der punktiert dargestellte Verlauf 152 einer Leistungskurve ist abhängig von einer niedrigen Turbulenzintensität I₁₅, beispielsweise 8 %. Der als durchgezogene Linie dargestellte Verlauf 154 einer Leistungskurve ist abhängig von einer mittleren Turbulenzintensität I₁₅, beispielsweise 12 %. Der strichliniert dargestellte Verlauf 156 einer Leistungskurve ist abhängig von einer hohen Turbulenzintensität I₁₅, beispielsweise 16 %. Die exemplarischen Verläufe 152, 154, 156 der Leistungskurven sind abhängig von der Turbulenzintensität I₁₅ des Windfeldes, so dass im Teillastbereich bei höheren Turbulenzintensitäten I₁₅ mehr Leistung und im Bereich hin zur Nennlast P_{Nenn} weniger Leistung Pₑₗ erzeugt wird. Wie beschrieben ist das Windfeld durch eine Vielzahl von Parametern charakterisiert. Die wichtigsten Windfeldparameter sind mittlere Windgeschwindigkeit, Turbulenz, vertikale und horizontale Scherung, Windrichtungsänderung über der Höhe, Schräganströmung und Luftdichte. Nennlast ist insbesondere eine auf die Windenergieanlage wirkende Last, bei der die Windenergieanlage elektrische Nennleistung erzeugt.

Dieser Effekt kann gerade bei Windenergieanlagen 100, die bei niedrigen mittleren Windgeschwindigkeiten v betrieben werden, dazu führen, dass durch die vermehrte Häufigkeit von niedrigen Windgeschwindigkeiten v die Windenergieanlage 100 bei erhöhter Turbulenzintensitäten I₁₅ mehr Ertrag liefert als bei niedrigerer Turbulenzintensitäten I₁₅.

Somit ist es möglich, über die Erstellung von turbulenzabhängigen Leistungskurven 152, 154, 156 der Tatsache Rechnung zu tragen, dass bei niedrigen mittleren Windgeschwindigkeiten einem Betrieb der Windenergieanlage 100 in der höheren Turbulenzklasse "A" ein höherer Ertrag generiert wird als in der niedrigeren Turbulenzklasse "B". Somit lässt sich der durch die Nenndrehzahlabsenkung verursachte Ertragsverlust im erfindungsgemäßen Vorgehen weiter reduzieren und gegebenenfalls komplett kompensieren.

Die Umsetzung erfolgt an drehzahlvariablen, pitchwinkelgesteuerten Windenergieanlagen 100, die in unterschiedlichen Turbulenzklassen "A", "B", "C" betrieben werden und mittels einer Regelung 200 in der Lage sind, die Rotornenndrehzahl bzw. das Drehmoment und/oder den Pitchwinkel bei der Steuerung bzw. Regelung der Windenergieanlage 100 zu berücksichtigen. Die Erfindung ermöglicht eine nahezu oder vollständig ertragsneutrale Reduzierung bzw. Kompensation von Anlagenlasten einer pitchwinkelgesteuerten, drehzahlvariablen Windenergieanlage 100 bei einem Übergang von Turbulenzklassen mit niedriger zu höherer Turbulenzintensität, von Turbulenzklasse "C nach Turbulenzklasse "B" oder von Turbulenzklasse "B" nach Turbulenzklasse "A", durch die Absenkung der Rotornenndrehzahl. Zudem kann der Einsatz einer standortabhängigen Wirbelgeneratorbelegung vorgesehen werden, wobei die radiale Ausdehnung der Wirbelgeneratoren 118 in Abhängigkeit von der am Standort bestimmten Turbulenzklasse "A", "B" oder "C" bestimmt wird. Alternativ kann bei einem Übergang von einer höheren zu einer niedrigeren Turbulenzklasse der Ertrag der Anlage erhöht werden, indem die Rotornenndrehzahl erhöht und gleichzeitig der Blattwinkel und/oder die radiale Ausdehnung vorhandener Wirbelgeneratoren reduziert wird.

Die standortabhängige Vornahme der Gestaltung der radialen Ausdehnung der Wirbelgeneratoren 118 ist auch in einem anderen Zusammenhang zielführend. Eine Absenkung der Luftdichte hat physikalisch dieselben Auswirkungen wie das Absenken der Rotornenndrehzahl. Beim Auftreten der Absenkung der Luftdichte wird in diesem Falle der Pitchwinkel ebenso ab einer gewissen Leistung angehoben, um eine Strömungsablösung am Rotorblatt 108 und damit signifikante Ertragsverluste zu vermeiden. Ebenso wie weiter oben bereits ausgeführt, können die minder schweren Ertragsverluste des Herauspitchens ggf. weiter minimiert werden, wenn eine für die an den Standort der Windenergieanlage 100 vorliegende Luftdichte angepasste Belegung der Wirbelgeneratoren vorgesehen wird. Indem die radiale Ausdehnung der Wirbelgeneratoren in Abhängigkeit von der am Standort bestimmten Luftdichte vorgenommen wird, so dass die Anhebung des Pitchwinkels weniger stark ausfällt oder sogar ganz entfallen kann, was sich in Summe in einem höheren Ertrag niederschlägt. Für eine standortspezifische Ertragssteigerung kann eine luftdichteabhängige Anordnung von Wirbelgeneratoren vorgesehen werden.

## Patentansprüche

1. Verfahren zum Betreiben einer Windenergieanlage (100) zum Erzeugen elektrischer Leistung aus Wind, wobei die Windenergieanlage (100) einen aerodynamischen Rotor (106) mit in ihrem Blattwinkel verstellbaren Rotorblättern (108) aufweist und der Rotor (106) mit einer einstellbaren Rotornenndrehzahl (nA, nB) betrieben wird, wobei eine Turbulenzklasse an einem Standort der Windenergieanlage (100) bestimmt und die Rotornenndrehzahl (nA, nB) in Abhängigkeit von der bestimmten Turbulenzklasse festgelegt wird, und bei einem Übergang von einer niedrigeren Turbulenzklasse zu einer höheren Turbulenzklasse die Rotornenndrehzahl (nA, nB) abgesenkt wird, **dadurch gekennzeichnet, dass** die Turbulenzklasse aus der Gruppe enthaltend "A", "B" und "C" ausgewählt wird, wobei die Rotornenndrehzahl (nA, nB) gegenüber der bestimmten Turbulenzklasse derart festgelegt wird, dass die Rotornenndrehzahl (nA, nB) bei Turbulenzklasse "A" kleiner als bei Turbulenzklasse "B" und bei Turbulenzklasse "B" kleiner als bei Turbulenzklasse "C" ist.

2. Verfahren nach Anspruch 1, **dadurch gekennzeichnet, dass** die Turbulenzklasse aufgrund einer an der Windenergieanlage (100) gemessenen Turbulenzintensität (115) bestimmt wird, und vorzugsweise die Festlegung der Rotornenndrehzahl (nA, nB) in Abhängigkeit von der bestimmten Turbulenzklasse derart erfolgt, dass aufgrund der gemessenen Turbulenzintensität (115) zu erwartende Lasten auf den Rotor (106) kompensiert werden.

3. Verfahren nach einem der vorstehenden Ansprüche, **dadurch gekennzeichnet, dass** auf den Rotorblättern (108) zwischen Rotorblattwurzel (114) und Rotorblattspitze (116) mehrere Wirbelgeneratoren (118) angeordnet sind, deren Anzahl und Positionierung, insbesondere deren radiale Ausdehnung (DA, DB) ausgehend von der Rotorblattwurzel (114) in Richtung der Rotorblattspitze (116), in Abhängigkeit von der bestimmten Turbulenzklasse bestimmt wird, und vorzugsweise die Anzahl und die Positionierung der Wirbelgeneratoren (118) entlang des Rotorblattes (108) in Abhängigkeit von einer standortspezifischen Luftdichte bestimmt ist, und weiter vorzugsweise
die radiale Ausdehnung der Wirbelgeneratoren (118) entlang des Rotorblattes (108) in Abhängigkeit der Luftdichte derart bestimmt ist, dass zusätzliche Ertragsverluste durch eine bei niedrigerer Luftdichte notwendige Erhöhung des Blattwinkels zumindest teilweise kompensiert werden.

4. Verfahren nach einem der vorstehenden Ansprüche, wobei die Rotornenndrehzahl (nA, nB) in Abhängigkeit von einer standortspezifischen Luftdichte bestimmt wird.

5. Verfahren nach einem der vorstehenden Ansprüche, **dadurch gekennzeichnet, dass** die Windenergieanlage (100) in Abhängigkeit von der Turbulenzklasse gemäß unterschiedlicher Betriebskennlinien betrieben wird, so dass in Abhängigkeit von der Turbulenzklasse unterschiedliche Leistungskurven (152, 154, 156) garantiert werden.

6. Verfahren nach einem der vorstehenden Ansprüche, **dadurch gekennzeichnet, dass** eine Blattwinkelkennlinie in Abhängigkeit von der bestimmten Turbulenzklasse festgelegt wird.

7. Verfahren nach einem der vorstehenden Ansprüche, **dadurch gekennzeichnet, dass** ein Absenken der Rotornenndrehzahl (nA, nB) mit einer Erhöhung des Blattwinkels in wenigstens einem Betriebspunkt verbunden ist, und weiter vorzugsweise
der Erhöhung des Blattwinkels in wenigstens einem Betriebspunkt durch die Auslegung und Positionierung von Wirbelgeneratoren (118) entgegengewirkt wird, derart, dass die Absenkung der Rotornenndrehzahl (nA, nB) im Wesentlichen ertragsneutral bleibt.

8. Verfahren nach Anspruch 7, **dadurch gekennzeichnet, dass** die Belegung der Rotorblätter (108) mit Wirbelgeneratoren (118) bei einer turbulenzklassenabhängigen Auslegung der Windenergieanlage (100) in radialer Richtung nach außen erhöht ist, um bei einer durch die Absenkung der Rotornenndrehzahl (nA, nB) bei höherer Turbulenzklasse bedingten Absenkung der Schnelllaufzahl (λ) im Betrieb den Blattwinkel einer niedrigeren Turbulenzklasse im Wesentlichen beizubehalten.

9. Verfahren nach Anspruch 7 oder 8, wobei die Auslegung und Positionierung von Wirbelgeneratoren (118) unter Berücksichtigung der Luftdichte erfolgt ist.

10. Windenergieanlage (100) umfassend einen aerodynamischen Rotor (106) mit in ihrem Blattwinkel verstellbaren Rotorblättern (108), wobei der Rotor (106) mit einer einstellbaren Rotornenndrehzahl (nA, nB) betreibbar ist, sowie eine Regelung (200), **dadurch gekennzeichnet, dass** die Regelung (200) dazu eingerichtet ist, die Windenergieanlage nach einem Verfahren gemäß wenigstens einem der Ansprüche 1 bis 9 zu betreiben.

11. Windpark mit mehreren Windenergieanlagen (100) nach Anspruch 10.

## Claims

1. A method for operating a wind power installation (100) for the purpose of generating electrical power from wind, wherein the wind power installation (100) has an aerodynamic rotor (106) having rotor blades (108) that can be adjusted in their blade angle, and the rotor (106) is operated at a settable rated rotor speed (n_{A}, n_{B}), wherein a turbulence class at a site of the wind power installation (100) is determined, and the rated rotor speed (n_{A}, n_{B}) is defined in dependence on the determined turbulence class, and in the case of a transition from a lower turbulence class to a higher turbulence class, the rated rotor speed (n_{A}, n_{B}) is lowered, **characterized in that** the turbulence class is selected from the group that includes "A", "B" and "C", wherein the rated rotor speed (n_{A}, n_{B}) is defined, with respect to the determined turbulence class, in such a manner that the rated rotor speed (n_{A}, n_{B}) is lower for turbulence class "A" than for turbulence class "B", and lower for turbulence class "B" than for turbulence class "C".

2. The method as claimed in claim 1, **characterized in that** the turbulence class is determined on the basis of a turbulence intensity (I₁₅) measured at the wind power installation (100) and preferably the definition of the rated rotor speed (n_{A}, n_{B}) in dependence on the determined turbulence class is effected in such a manner that the loads to be expected on the rotor (106) due to the measured turbulence intensity (I₁₅) are compensated.

3. The method as claimed in any one of the preceding claims, **characterized in that** a plurality of vortex generators (118) are arranged on the rotor blades (108), between the rotor-blade root (114) and the rotor-blade tip (116), the number and positioning of which, in particular their radial extent (D_{A}, D_{B}) starting from the rotor-blade root (114) in the direction of the rotor-blade tip (116), is determined in dependence on the determined turbulence class and preferably the number and positioning of the vortex generators (118) along the rotor blade (108) is determined in dependence on a site-specific air density and further preferably the radial extent of the vortex generators (118) along the rotor blade (108) is determined in dependence on the air density in such a manner that additional yield losses due to an increase in the blade angle necessary at lower air density are at least partially compensated.

4. The method as claimed in any one of the preceding claims, wherein the rated rotor speed (n_{A}, n_{B}) is determined in dependence on a site-specific air density.

5. The method as claimed in any one of the preceding claims, **characterized in that** the wind power installation (100) is operated, in dependence on the turbulence class, according to differing operating characteristics, such that differing power curves (152, 154, 156) are guaranteed in dependence on the turbulence class.

6. The method as claimed in any one of the preceding claims, **characterized in that** a blade angle characteristic is defined in dependence on the determined turbulence class.

7. The method as claimed in any one of the preceding claims, **characterized in that**, a lowering of the rated rotor speed (n_{A}, n_{B}) is associated with an increase in the blade angle at at least one operating point and further preferably the increase in the blade angle at at least one operating point is counteracted by the design and positioning of vortex generators (118) in such a manner that the lowering of the rated rotor speed (n_{A}, n_{B}) remains substantially neutral in respect of yield.

8. The method as claimed in claim 7, **characterized in that**, in the case of the wind power installation (100) designed in dependence on a turbulence class, the assignment of vortex generators (118) to the rotor blades (108) is increased in a radially outward direction in order, in the case of a lowering in the tip-speed ratio (A) caused by the lowering of the rated rotor speed (n_{A}, n_{B}) in the case of a higher turbulence class, to substantially maintain during operation the blade angle of a lower turbulence class.

9. The method as claimed in claim 7 or 8, wherein the air density is taken into account in the design and positioning of vortex generators (118).

10. A wind power installation (100), comprising an aerodynamic rotor (106) having rotor blades (108) that can be adjusted in their blade angle, wherein the rotor (106) can be operated at a settable rated rotor speed (n_{A}, n_{B}), and comprising a closed-loop control system (200), **characterized in that** the closed-loop control system (200) is configured to operate the wind power installation according to a method as per at least one of claims 1 to 9.

11. A wind farm having a plurality of wind power installations (100) as claimed in claim 10.

## Revendications

1. Procédé de fonctionnement d'une éolienne (100) pour produire de la puissance électrique à partir du vent, dans lequel l'éolienne (100) présente un rotor aérodynamique (106) avec des pales de rotor (108) réglables en angle de pale et le rotor (106) fonctionne avec une vitesse nominale de rotor (nA, nB) ajustable, dans lequel une classe de turbulence est déterminée sur un site de l'éolienne (100) et la vitesse nominale de rotor (nA, nB) est fixée en fonction de la classe de turbulence déterminée et, en cas de passage d'une classe de turbulence inférieure à une classe de turbulence supérieure, la vitesse nominale de rotor (nA, nB) est réduite, **caractérisé en ce que** la classe de turbulence est sélectionnée dans le groupe contenant « A », « B » et « C », dans lequel la vitesse nominale de rotor (nA, nB) est fixée par rapport à la classe de turbulence déterminée de sorte que la vitesse nominale de rotor (nA, nB) pour la classe de turbulence « A » est plus petite que pour la classe de turbulence « B » et, pour la classe de turbulence « B », est plus petite que pour la classe de turbulence « C ».

2. Procédé selon la revendication 1, **caractérisé en ce que** la classe de turbulence est déterminée sur la base d'une intensité de turbulence (115) mesurée sur l'éolienne (100), et de préférence la fixation de la vitesse nominale de rotor (nA, nB) est effectuée en fonction de la classe de turbulence déterminée de sorte que les charges attendues sur le rotor (106) en raison de l'intensité de turbulence (115) mesurée sont compensées.

3. Procédé selon l'une quelconque des revendications précédentes, **caractérisé en ce que** plusieurs générateurs de turbulence (118) sont disposés sur les pales de rotor (108) entre le pied de pale de rotor (114) et le bout de pale de rotor (116), dont le nombre et le positionnement, en particulier l'étendue radiale (DA, DB) de ceux- ci à partir du pied de pale de rotor (114) en direction du bout de pale de rotor (116) est déterminée en fonction de la classe de turbulence déterminée, et de préférence
le nombre et le positionnement des générateurs de turbulence (118) le long de la pale de rotor (108) est déterminé en fonction d'une densité d'air spécifique au site, et mieux encore
l'étendue radiale des générateurs de turbulence (118) le long de la pale de rotor (108) est déterminée en fonction de la densité d'air, de sorte que des pertes de rendement supplémentaires sont compensées au moins partiellement par une augmentation de l'angle de pale nécessaire en cas de densité d'air inférieure.

4. Procédé selon l'une quelconque des revendications précédentes, dans lequel la vitesse nominale de rotor (nA, nB) est déterminée en fonction d'une densité d'air spécifique au site.

5. Procédé selon l'une quelconque des revendications précédentes, **caractérisé en ce que** l'éolienne (100) fonctionne selon différentes courbes caractéristiques de fonctionnement en fonction de la classe de turbulence, de sorte que, en fonction de la classe de turbulence, différentes courbes de puissance (152, 154, 156) sont garanties.

6. Procédé selon l'une quelconque des revendications précédentes, **caractérisé en ce qu'**une courbe caractéristique d'angle de pale est fixée en fonction de la classe de turbulence déterminée.

7. Procédé selon l'une quelconque des revendications précédentes, **caractérisé en ce qu'**une réduction de la vitesse nominale de rotor (nA, nB) est associée à une augmentation de l'angle de pale dans au moins un point de fonctionnement, et mieux encore
l'augmentation de l'angle de pale dans au moins un point de fonctionnement est contrecarrée par la conception et le positionnement de générateurs de turbulence (118) de sorte que la réduction de la vitesse nominale de rotor (nA, nB) reste sensiblement neutre en termes de rendement.

8. Procédé selon la revendication 7, **caractérisé en ce que** l'occupation des pales de rotor (108) avec les générateurs de turbulence (118) est augmentée vers l'extérieur dans une conception dépendante de la classe de turbulence de l'éolienne (100) dans le sens radial, afin de conserver sensiblement l'angle de pale d'une classe de turbulence inférieure lors d'une réduction du nombre de rotations rapides (λ) en fonctionnement due à la réduction de la vitesse nominale de rotor (nA, nB) dans une classe de turbulence supérieure.

9. Procédé selon la revendication 7 ou 8, dans lequel la conception et le positionnement de générateurs de turbulence (118) sont effectués en tenant compte de la densité d'air.

10. Éolienne (100) comprenant un rotor aérodynamique (106) avec des pales de rotor (108) réglables en angle de pale, dans lequel le rotor (106) peut fonctionner avec une vitesse nominale de rotor (nA, nB) ajustable, ainsi qu'une régulation (200), **caractérisée en ce que** la régulation (200) est conçue pour faire fonctionner l'éolienne selon un procédé selon au moins l'une des revendications 1 à 9.

11. Parc éolien avec plusieurs éoliennes (100) selon la revendication 10.
